## Europäisches Patentamt
## European Patent Office
## Office européen des brevets

(19)

(11) Veröffentlichungsnummer: **0 001 245**
**B1**

(12) # EUROPÄISCHE PATENTSCHRIFT

(45) Veröffentlichungstag der Patentschrift:
27.01.82

(51) Int. Cl.³: **C 08 L 77/00, C 08 L 51/04**

(21) Anmeldenummer: 78100850.3

(22) Anmeldetag: 08.09.78

(54) **Schlagzähe Polyamidmasse und deren Verwendung in Formkörpern.**

(30) Priorität: 20.09.77 DE 2742176
29.12.77 DE 2758615

(43) Veröffentlichungstag der Anmeldung:
04.04.79 Patentblatt 79/7

(45) Bekanntmachung des Hinweises auf die Patenterteilung:
27.01.82 Patentblatt 82/4

(84) Benannte Vertragsstaaten:
BE DE FR GB NL SE

(56) Entgegenhaltungen:
FR-A-1 323 466
NL-A-7 702 165
US-A-3 267 175
CHEMICAL ABSTRACTS, vol. 74 (1971)
nr. 26, 28 Juni 1971, Seite 40,
ref nr. 142 900 v
K. JUNZO; T. YASUMOTO; S. INOUE:
(Toray Industries, Inc.)

(73) Patentinhaber: BAYER AG, Zentralbereich Patente,
Marken und Lizenzen, D-5090 Leverkusen 1, Bayerwerk
(DE)

(72) Erfinder: Tacke, Peter, Dr., Brandenburger Strasse 12,
D-4150 Krefeld (DE)
Erfinder: Humme, Gert, Dr., Ackerstrasse 17,
D-5068 Odenthal (DE)
Erfinder: Fahnler, Friedrich, Ing.-grad., Wimmersweg 60,
D-4150 Krefeld 1 (DE)
Erfinder: Neuray, Dieter, Dr., Buschstrasse 149,
D-4150 Krefeld (DE)
Erfinder: Ott, Karl-Heinz, Dr., Paul-Klee-Strasse 54,
D-5090 Leverkusen 1 (DE)

## Schlagzähe Polyamidmasse und deren Verwendung in Formkörpern

Die Erfindung betrifft thermoplastische Polyamid-Formmassen, die eine erhöhte Kerbschlagzähigkeit und Resistenz gegen oxidativen Abbau aufweisen.

Im Trockenzustand besitzen Formkörper aus Polyamiden eine relativ geringe Schlagzähigkeit. Durch Konditionierung, d. h., durch Aufnahme von Wasser, kann die Zähigkeit erheblich verbessert werden. Da die erforderliche gleichmäßige Verteilung des Wassers jedoch ein zeitraubender Vorgang ist, wird schon lange nach geeigneten Substanzen gesucht, die den Polyamiden schon im Trockenzustand die Zähigkeit verleihen, die sie sonst nur durch Konditionierung erreichen.

Eine Verbesserung der Zähigkeit bewirken beispielsweise niedermolekulare Weichmacher, die im Kunststoff-Handbuch, Band VI, S. 242, Polyamide, Carl-Hanser-Verlag, 1966, genannt sind. Diese Weichmacher weisen aber verschiedene Nachteile auf, so z. B. ihre Neigung zur Migration, Flüchtigkeit, ihre geringe Wirksamkeit bei tiefen Temperaturen, zu starke Weichmachung bei bescheidener Verbesserung der Zähigkeit.

Aus den DBP 1 241 606 und 1 669 702 ist die Einarbeitung von Copolymeren aus Äthylen, Acrylsäure und/oder Derivaten der Acrylsäure in die Polyamide zur Verbesserung der Schlagzähigkeit bekannt. Diese Mischungen zeigen aber eine ungenügende Stabilität gegen oxidativen Abbau.

Dies trifft auch für die Polyamidformmassen zu, die gemäß DOS 2 622 973 eine Verbesserung der Schlagzähigkeit durch Abmischen mit den verschiedensten Copolymeren oder Pfropfpolymeren von Vinylverbindungen auf Homo- und Copolymere aufweisen.

Gemische aus aliphatischen Polyamiden und Polybutadien- und Isoprenkautschuk zeigen zwar eine erhöhte Resistenz gegen oxidativen Abbau, aber ihr Herstellungsverfahren ist durch langdauerndes Einrühren des Kautschuks in die Polyamidschmelze nicht wirtschaftlich. Werden daher die Formmassen aus Polybutadienkautschuk und Polyamiden in handelsüblichen Extrudern hergestellt, so zeigt sich eine starke Unverträglichkeit der Komponenten. Die Unverträglichkeit erkennt man an inhomogenen Oberflächen und besonders an Abschieferungen bei Biegebeanspruchung der aus den Legierungen hergestellten Formteile.

Versuche, die Verträglichkeit durch Verwendung von Pfropfcopolymeren mit kautschukelastischen Eigenschaften zu verbessern, sind aus der DOS 2 435 266 bekannt. Gemäß der Lehre dieser Offenlegungsschrift eignen sich dazu alle üblichen Pfropfcopolymere, sofern sie nicht als Pfropfgrundlage Diene mit konjungierten Doppelbindungen, wie z. B. Butadien, enthalten. Diese Art Pfropfpolymere sind zum Abmischen mit Polyamiden ungeeignet, da dabei Formassen mit einer ungenügenden Stabilität gegen die Einwirkung von Licht, Wärme und Sauerstoff erhalten werden.

Überraschenderweise wurde aber erfindungsgemäß gefunden, daß Polymerlegierungen aus Polyamiden und Pfropfcopolymeren von (Meth)acrylsäurederivaten auf vernetzte Polybutadiene nicht nur eine hervorragende Homogenität ohne Neigung zur Entmischung und sehr gute Schlag- und Kerbschlagzähigkeit, besonders bei tiefen Temperaturen, aufweisen, sondern auch eine überraschende Stabilität gegen oxidativen Abbau.

Dies war auch bei Kenntnis der japanischen Patentschrift Nr. 46-2354 nicht zu erwarten, da in dieser Patentschrift gelehrt wird, Caprolactam in Gegenwart des Pfropfproduktes zu polymerisieren und nicht die beiden Polymerkomponenten abzumischen, um die gewünschte Verbesserung der Polyamideigenschaften zu erzielen. Unerwarteterweise bringt aber gerade das Abmischen der beiden Polymerkomponenten eine weit größere Verbesserung der Kerbschlagzähigkeit von Polyamiden als die Polymerisation des Lactams in Gegenwart von Vinyl-pfropfpolymerisaten.

Gegenstand der Erfindung sind daher Polyamidformmassen bestehend aus

I. 40 bis 99,5 Gew.-% Polyamiden mit einer relativen Viskosität (gemessen an einer 1%igen Lösung in m-Kresol bei 25° C) von 2,3 bis 5 und

II. 0,5 bis 60 Gew.-% eines Pfropfproduktes, hergestellt aus
    a) 34 bis 95 Gew.-% eines vernetzten Polymerisats aus Butadien und/oder Polyisopropen, das gegebenenfalls bis zu 40 Gew.-% aus Styrol und/oder Acrylnitril und/oder einem Ester der Acrylsäure aufgebaut sein kann, als Pfropfgrundlage und
    b) 5 bis 66 Gew.-% von aufzupfropfenden Einheiten von
        $\alpha$) 3 bis 100 Gew.-%, vorzugsweise 10 bis 100 Gew.-%, eines Esters der (Meth)acrylsäure mit bis zu 22 C-Atomen,
        $\beta$) 0 bis 80 Gew.-%, vorzugsweise 0 bis 60 Gew.-%, von (Meth)acrylamid mit bis zu 22 C-Atomen und
        $\gamma$) 0 bis 80 Gew.-%, vorzugsweise 0 bis 60 Gew.-%, von (Meth)-acrylnitril,

wobei die Summe aus I. und II., a) und b) bzw. $\alpha$) bis $\gamma$) jeweils 100 Gew.-% ergeben muß.

Als Polyamide für die erfindungsgemäßen Formmassen können eingesetzt werden: Polyamid-6, Polyamid-6,6, Gemische und Blockcopolymere aus diesen beiden Komponenten und Copolymere aus $\varepsilon$-Caprolactam, Adipinsäure und Hexamethylendiamin. Weiterhin kommen Polyamide in Betracht, deren Säurekomponente ganz oder teilweise aus Terephthalsäure und/oder Isophthalsäure und/oder Korksäure und/oder Sebacinsäure und/oder Azelainsäure und/oder Cyclohexandicarbonsäure, deren Diaminkomponente ganz oder teilweise aus m- und/oder p-Xylylendiamin und/oder 2,2,4-Trimethylhexamethylendiamin und/oder 2,4,4-Trimethylhexamethylendiamin und/oder Isophorondiamin besteht.

Außerdem sind Polyamide zu nennen, die ganz oder teilweise aus Lactamen mit 7 bis 12 C-Atomen, gegebenenfalls unter Mitverwendung einer oder mehrerer der obengenannten Ausgangskomponenten, hergestellt werden. Polyamid-6 und Polyamid-6,6 wird bevorzugt verwendet.

Für die Herstellung der Pfropfprodukte werden vernetzte Kautschuke als Pfropfgrundlage eingesetzt. Vorzugsweise werden Dienkautschuke auf Basis Polybutadien und/oder Polyisopren, die bis zu 40 Gew.-% Styrol und/oder Acrylnitril und/oder Ester der Acrylsäure als Comonomere enthalten können, verwendet.

Pfropfmonomere im Sinne der Erfindung sind Acrylnitril, Methacrylnitril, aliphatische Ester und Amide der Acrylsäure und Methacrylsäure mit bis zu 22 C-Atomen. Bevorzugte Pfropfmonomere sind Ester der Acrylsäure und Acrylnitril. Von den Estern der Acrylsäure sind der Äthyl-, der n-Butyl-, der tert.-Butyl-, der Octyl- und der Äthylhexylester besonders bevorzugt.

Die erfindungsgemäßen Pfropfprodukte können nach allen bekannten Polymerisationsverfahren (Emulsions-, Lösungs-, Masse-, Suspensions-, Fällungspolymerisation) sowie nach Kombinationen aus diesen Verfahren hergestellt werden.

Zur Herstellung der Pfropfprodukte werden die aufzupfropfenden Monomeren in Gegenwart der vorgebildeten Kautschuk-Pfropfgrundlage polymerisiert. Es bildet sich dabei neben dem eigentlichen Pfropfpolymerisat auch freies Polymerisat der Pfropfmonomeren. Unter Pfropfprodukte wird die Summe der eigentlichen Pfropfpolymerisate und der freien Polymerisate verstanden. Die Menge der aufgepfropften Monomeren, ihr Molekulargewicht und die Zusammensetzung der gepfropften Monomeren kann in weiten Grenzen durch Variation der Polymerisationsbedingungen beeinflußt werden. Hierzu gehören vor allem: Art des Polymerisationsverfahrens, Temperatur, Aktivatorsystem, Molekulargewichtsregler, Rührbedingungen und Art der Monomer-Dosierung.

Bevorzugtes Polymerisationsverfahren für die erfindungsgemäßen Pfropfpolymeren ist die Emulsionspolymerisation.

Für die Herstellung der Pfropfprodukte durch Emulsionspolymerisation werden vernetzte, vorzugsweise durch Emulsionspolymerisation gewonnene Dienkautschuke als Pfropfgrundlagen bevorzugt. Besonders bevorzugt sind solche Kautschuke, die einen »mittleren Teilchendurchmesser« $d_{50} > 0,1\ \mu m$, vorzugsweise $> 0,2\ \mu m$, haben (zur Bestimmung vgl. W. Scholtan und H. Lange, Kolloid-Z. und Z. Polymere 250 [1972], 782 – 796).

Die vorgenannten Pfropfmonomeren können jedes für sich allein oder auch in Mischung zur Pfropfreaktion eingesetzt werden.

Statt nur einer Pfropfgrundlage können auch Abmischungen verschiedener Pfropfgrundlagen zur Herstellung der Pfropfprodukte eingesetzt werden. Weiterhin können statt nur eines Pfropfproduktes auch Abmischungen mehrerer erfindungsgemäßer Pfropfprodukte mit unterschiedlichem Aufbau zur Abmischung mit den Polyamiden herangezogen werden.

In die erfindungsgemäßen Formmassen können bis zu 30 Gew.-% Füll- und/oder Verstärkungsstoffe, bis zu 3 Gew.-% Verarbeitungshilfsmittel, bis zu 1 Gew.-% Stabilisatoren, bis zu 3 Gew.-% Antistatika, bis zu 5 Gew.-% Farbpigmente und Farbstoffe und bis zu 20 Gew.-%, jeweils bezogen auf die gesamte Mischung, Brandschutzmittel eingearbeitet werden. Als solche sind unter anderen zu nennen:

Glasfasern und -kugeln, Asbest, Kreide, Talkum, Kaolin, sterisch gehinderte Phenole, Kupfersalze, $TiO_2$, ZnS, Phthalocyanine, pulverisierter roter Phosphor, Phosphorverbindungen, Halogen- und Stickstoffverbindungen, Oxide von Antimon, Eisen, Zink, Aluminiumoxidhydrat.

Die Einarbeitung der Pfropfprodukte in die Polyamide kann in handelsüblichen Extrudern erfolgen. Bevorzugt werden Doppelwellenextruder eingesetzt.

Die erfindungsgemäßen Formmassen eignen sich besonders zur Herstellung von auch bei tiefen Temperaturen noch sehr schlagzähen Spritzgußteilen, die ohne besondere Stabilisierung eine hervorragende Resistenz gegen oxidativen Abbau bei erhöhten Temperaturen besitzen.


### Beispiele

### Herstellung der Pfropfgrundlagen (Versuche 1 – 3)

In einem druckfesten Rührgefäß wird eine Lösung aus (siehe Tabelle 1)

w Gew.-Teilen salzfreiem Wasser,
l Gew.-Teilen Natriumsalz der disproportionierten Abietinsäure und
p Gew.-Teilen Kaliumperoxidisulfat vorgelegt.

Nach Verdrängen der Luft durch Stickstoff und Einstellung der Innentemperatur auf 55° C werden zunächst

r Gew.-Teile Dodecylmercaptan, sodann
b Gew.-Teile Butadien,
s Gew.-Teile ˙Styrol,
f Gew.-Teile n-Butylacrylat polymerisiert.

Mit absinkender Reaktionsgeschwindigkeit bei fortschreitender Polymerisation wird die Temperatur langsam auf 68°C angehoben.

Nach beendeter Polymerisation werden geringe Mengen des nicht umgesetzten Butadiens durch Ausrühren des erhaltenen Latex unter vermindertem Druck entfernt.

### Herstellung der Pfropfprodukte (Versuche 4 – 14)

Die in den Versuchen 1 bis 3 beschriebenen Pfropfgrundlagenlatices werden mit entsalztem Wasser auf eine solche Polymerisatkonzentration verdünnt, daß auf

n Gew.-Teile Pfropfgrundlage (Festprodukt) (s. Tab. 2)
175 Gew.-Teile Wasser entfallen.

Das zur Verdünnung des Latex verwendete Wasser enthält 0,3 Gew.-Teile (bezogen auf Pfropfgrundlage + Pfropfmonomere) Kaliumperoxidisulfat.

Nach Verdrängung der Luft durch Stickstoff und Erwärmen auf 65°C werden in 2 getrennten Zuläufen, bezogen auf n Gew.-Teile Pfropfgrundlage (Festpolymerisat) (Tabelle 2)

2 Gew.-Teile Emulgator (Na-Salz der disproportionierten Abietinsäure oder Alkylsulfat), gelöst in 25 Gew.-Teilen entsalztem Wasser

und die Summe der in Tabelle 2 angegebenen Monomeren (Acrylnitril, Acrylsäureester) zugesetzt.

Die Zulaufdauer beträgt ca. 4 Stunden. Zur Vervollständigung der Reaktion wird nach beendetem Zulauf noch 2 Stunden bei 65°C weitergerührt.

Der so erhaltene Pfropfprodukt-Latex wird nach Zusatz von 1 Gew.-Teil auf 100 Teile Festpolymerisat eines phenolischen Antioxidans (2,6-Ditertiärbutyl-p-kresol) mit 2%iger MgSO₄-Lösung koaguliert, das Koagulat abgetrennt, salzfrei gewaschen und bei 70°C im Vakuum getrocknet.

### Einarbeitung der Pfropfprodukte in Polyamid (Versuche 15 – 30, Vergleichsbeispiele A – C)

Die Einarbeitung der in den Versuchen 4 bis 14 beschriebenen Pfropfprodukte in die Polyamide erfolgte in einem handelsüblichen Doppelwellenextruder ZSK 53 der Firma Werner & Pfleiderer. Die Schnecken besaßen eine Länge von 25 D. Die Arbeitsbedingungen und Versuchsergebnisse von Legierungen vom konstanten Mengenverhältnis Polyamid/Pfropfprodukt = 80 : 20 (Gew.-Teile) sind in Tabelle 3 zusammengestellt.

Die relative Lösungsviskosität des jeweiligen Polyamidanteils ($\eta$rel) wurde mit einer 1%igen Lösung in m-Kresol bei 25°C in einem Ubbelohde-Viskosimeter gemessen.

Die Temperaturmessung der Masse erfolgte beim Austritt aus der Extruderdüse mit einem Temperaturfühler.

Die Kerbschlagzähigkeit wurde im spritzfrischen Zustand gemäß DIN 53 453 an Normkleinstäben gemessen.

Tabelle 3 enthält einige Versuche, bei denen das Mengenverhältnis Polyamid/Pfropfprodukt = 65 : 35 beträgt. Tabelle 4 enthält einige Versuche, bei denen das Mengenverhältnis PA : Pfropfpolymerisat = 65 : 35 beträgt.

In Tabelle 5 wird die Kerbschlagzähigkeit der Legierungen bei tiefen Temperaturen, gemessen nach DIN 53 453, verglichen.

In Tabelle 6 ist die Stabilität der Legierungen gegen oxidativen Abbau bei erhöhten Temperaturen gegenübergestellt. Normkleinstäbe aus den verschiedenen Produkten wurden im Umlufttrockenschrank bei 100 bzw. 150°C gelagert, nach den angegebenen Zeiten ein Teil der Stäbe herausgenommen und nach Abkühlung auf 23°C die Schlagzähigkeit bestimmt.

4

Tabelle 1

Zusammensetzung der Pfropfgrundlagen

| Ver-suchs-Nr. | w | l | p | r | b | s | f | Fest-stoff-gehalt (%) | $d_{50}$ |
|---|---|---|---|---|---|---|---|---|---|
| 1 | 80 | 1,5[+]) | 0,3 | 0,35 | 100 | — | — | 56,1 | 0,38 |
| 2 | 80 | 1,5[+]) | 0,3 | 0,35 | 90 | 10 | — | 56,8 | 0,35 |
| 3 | 80 | 1,5[+]) | 0,3 | 0,35 | 95 | — | 5 | 56,5 | 0,31 |

[+]) Es werden zu Beginn der Polymerisation 0,5 Gew.-Teile des Emulgators vorgelegt und im Laufe der Polymerisation 1 Gew.-Teil nachdosiert.

Tabelle 2

Aufbau der Pfropfprodukte

| Ver-suchs-Nr. | Pfropf-grund-lage (Latex) aus Vers.-Nr. | Gew.-Tle. Pfropf-grundlage (Fest-polymerisat) | Gew.-Tle. n-Butyl-acrylat | Gew.-Tle. Acryl-nitril | Gew.-Tle. weitere Monomere | Gew.-Tle. Emulgator |
|---|---|---|---|---|---|---|
| 4 | 1 | 80 | 13 | 7 | — | 2 |
| 5 | 1 | 50 | 32 | 18 | — | 2 |
| 6 | 1 | 80 | 8 | 12 | — | 2 |
| 7 | 1 | 80 | 20 | — | — | 2 |
| 8 | 1 | 80 | — | — | 20 tert. Butyl-acrylat | 2 |
| 9 | 1 | 80 | — | 13 | 7 n-Oktyl-acrylat | 2 |
| 10 | 1 | 80 | — | 5 | 15 Styrol | 2 |
| 11 | 2 | 50 | 32 | 18 | — | 2 |
| 12 | 2 | 80 | 13 | 7 | — | 2 |
| 13 | 2 | 80 | 18 | — | 2 Acrylamid | 2 |
| 14 | 3 | 80 | 13 | 7 | — | 2 |

Tabelle 3

Zusammensetzung und Eigenschaften der Legierungen (Gewichtsverhältnis Polyamid : Pfropfprodukt = 80 : 20)

| Versuchs-Nr. | Propf-produkte von Vers.-Nr. | Polyamid/$n$ rel | Masse-temp. °C | Kerb-schlag-zähigk. bei 23°C in kJ/m$^2$ | Homo-genität (Weiß-bruch[+]) beim Knicken | Farbe |
|---|---|---|---|---|---|---|
| 15 | 4 | PA-6 3,91 | 266 | 53,8 | sehr gut | gelb |
| 16 | 5 | PA-6 3,91 | 267 | 52,2 | sehr gut | gelb |
| 17 | 6 | PA-6 3,91 | 262 | 54,1 | sehr gut | hellgelb |
| 18 | 7 | PA-6 3,91 | 265 | 29,8 | sehr gut | farblos |
| 19 | 8 | PA-6 3,91 | 273 | 55,3 | sehr gut | farblos |
| 20 | 9 | PA-6 3,91 | 262 | 33,7 | sehr gut | gelb |
| 21 | 11 | PA-6 3,91 | 269 | 55,7 | sehr gut | gelb |
| 22 | 12 | PA-6 3,91 | 263 | 55,1 | sehr gut | gelb |
| 23 | 13 | PA-6 3,91 | 269 | 32,5 | sehr gut | farblos |
| 24 | 14 | PA-6 3,91 | 265 | 53,9 | sehr gut | gelb |
| 25 | 4 | PA-6 2,94 | 243 | 41,5 | sehr gut | gelb |
| 26 | 4 | PA-6,6/4,05 | 288 | 51,7 | sehr gut | gelb |
| 27 | 4 | PA-6,6/3,17 | 281 | 43,2 | sehr gut | gelb |
| 28 | 4 | Copolymeres aus 85 Gew.-Tle. Caprolactam 15 Gew.-Tle. Laurinlactam /2,89 | 245 | 45,4 | sehr gut | gelb |
| 29 | 4 | 50 Gew.-Tle. PA-6/3,91 50 Gew.-Tle. PA-6,6/4,05 | 285 | 55,4 | sehr gut | gelb |
| 30 | 4 | PA aus Isophthal-säure/Hexa-methylendiamin/ 2,68 | 243 | 51,9 | sehr gut | gelb |

Fortsetzung

| Versuchs-Nr. | Propf-produkte von Vers.-Nr. | Polyamid/$n$ rel | Masse-temp. °C | Kerb-schlag-zähigk. bei 23°C in kJ/m² | Homo-genität (Weiß-bruch[+)) beim Knicken | Farbe |
|---|---|---|---|---|---|---|
| Vergleichs-beispiel A | Lupolen A 2910MX® | PA-6/3,91 | 268 | 55,3 | sehr gut | farblos vgl. Tbl. 6 |
| B | Polybutadien ungepfropft von Vers. 1 | PA-6/3,91 | 262 | 33,8 | sehr schlecht | hell-braun |
| C | Pfropfprodukt von Vers. 10 | PA-6/3,91 | 268 | 11,3 | mittel | fast farbl. |

[+]) Der Weißbruch wurde beurteilt nach 10maligem Knicken eines Normkleinstabes in der Mitte um 360°C.
® Copolymeres aus Äthylen mit 7 Gew.-% Butylacrylat und 4 Gew.-% Acrylsäure, siehe Kunststoffe, Bd. 62 (1972) S. 72.

Tabelle 4

Zusammensetzung der Eigenschaften der Legierungen (Gewichtsverhältnis Polyamid : Pfropfprodukt = 65 : 35)

| Versuchs-Nr. | Pfropf-produkt von Vers.-Nr. | Polyamid/$n$ rel | Masse-temp. °C | Kerb-schlag-zähigkeit bei 23°C in kJ/m² | Homogenität (Weißbruch beim Knicken) | Farbe |
|---|---|---|---|---|---|---|
| 31 | 4 | PA-6/3,91 | 276 | 58,9 | sehr gut | gelb |
| 32 | 7 | PA-6/3,91 | 273 | 60,3 | sehr gut | farblos |
| 33 | 8 | PA-6/3,91 | 273 | 69,3 | sehr gut | farblos |

Tabelle 5

Vergleich der Kerbschlagzähigkeit bei versch. Temp.

| Legierungen aus Versuch Nr. | Kerbschlagzähigkeit in kJ/m² bei | | | |
|---|---|---|---|---|
| | 23°C | 0°C | −20°C | −40°C |
| Vergleich PA-6, ($n$ rel = 3,91) | 5,5 | 4,5 | 4 | 4 |
| 18 | 29,8 | 22,3 | 18,2 | 11,2 |
| 19 | 55,3 | 32,5 | 23,2 | 21,3 |
| 22 | 55,1 | 34,6 | 23,5 | 17,8 |
| 31 | 58,9 | 45,6 | 32,8 | 26,4 |

Tabelle 6

Vergleich der Stabilität gegen oxidativen Abbau

| Legierung aus Vers. Nr. | Schlagzähigkeit in kJ/m² | | | | | | | |
| --- | --- | --- | --- | --- | --- | --- | --- | --- |
| | 100°C | | | | | | | |
| | 24Std. | 3 T | 7 T | 9 T | 14 T | 21 T | 36 T | 78 T |
| **Vergleichsbeispiele** | | | | | | | | |
| PA-6, $n$ rel = 3,91 | 26,6 | 25,5 | 6,4 | 4 | – | – | – | – |
| PA-6, $n$ rel = 3,91 enthaltend 0,5 Gew.-% 2,6-Ditert.-butyl-p-kresol | n. geb. | 58,8 | 36,2 | 19,5 | 5,5 | – | – | – |
| A[x] | n. geb. | 66 | 14,8 | 8 | – | – | – | – |
| 18 | n. geb. | n. geb. | n. geb. | 72,3 | 68,3 | 56 | 50,9 | 32,6 |
| 19 | n. geb. | n. geb. | n. geb. | 73,8 | 66,2 | 58,6 | 52,9 | 30,8 |
| 22 | n. geb. | n. geb. | n. geb. | 71,9 | 62,6 | 59,7 | 49,1 | 26,3 |
| 31 | n. geb. | n. geb. | n. geb. | 71,9 | 85,9 | 69,1 | 58,1 | 35,6 |

Tabelle 6 (Fortsetzung)

| Legierung aus Vers. Nr. | Schlagzähigkeit in kJ/m² | | | | | | | |
|---|---|---|---|---|---|---|---|---|
| | 150°C | | | | | | | |
| | 24 Std. | 3 T | 7 T | 9 T | 14 T | 21 T | 36 T | 78 T |
| Vergleichs-beispiele | | | | | | | | |
| PA-6, $n$ rel = 3,91 | 9,6 | 8 | 5,2 | 4 | — | — | — | — |
| PA-6, $n$ rel = 3,91 enthaltend 0,5 Gew.-% 2,6-Ditert.-butyl-p-kresol | 47,9 | 23,6 | 8,6 | 6,1 | 3,2 | — | — | — |
| A<sup>®</sup> | 15,4 | 10,4 | 6,8 | 5,6 | — | — | — | — |
| 18 | n. geb. | 76,2 | 74,5 | 68,8 | 53,6 | 48 | 51,6 | 22,2 |
| 19 | n. geb. | 78 | 73,9 | 69,7 | 57,2 | 54 | 51,5 | 23,7 |
| 22 | n. geb. | 74,1 | 72,3 | 63,5 | 54/ | 51,7 | 49,4 | 18,2 |
| 31 | n. geb. | 105 | 96,2 | 81,8 | 75,3 | 68 | 61,5 | 25 |

T = Tage.
<sup>®</sup> Gemäß Tabelle 3.

**Patentansprüche**

1. Polyamidformmassen, bestehend aus

I. 40 bis 99,5 Gew.-% Polyamiden mit einer relativen Viskosität (gemessen an einer 1%igen Lösung in m-Kresol bei 25° C) von 2,3 bis 5 und
II. 0,5 bis 60 Gew.-% eines Pfropfproduktes, hergestellt aus
   a) 34 bis 95 Gew.-% eines vernetzten Polymerisats aus Butadien und/oder Polyisopropen, das gegebenenfalls bis zu 40 Gew.-% aus Styrol und/oder Acrylnitril und/oder einem Ester der Acrylsäure aufgebaut sein kann, als Pfropfgrundlage und
   b) 5 bis 66 Gew.-% von aufzupfropfenden Einheiten von
      $\alpha$) 3 bis 100 Gew.-% eines Esters der (Meth)acrylsäure mit bis zu 22 C-Atomen,
      $\beta$) 0 bis 80 Gew.-% von (Meth)acrylamid mit bis zu 22 C-Atomen und
      $\gamma$) 0 bis 80 Gew.-% von (Meth)acrylnitril,
   wobei die Summe aus I. und II., a) und b) bzw. $\alpha$) bis $\gamma$) jeweils 100 Gew.-% ergeben muß.

2. Polyamidformmassen gemäß Anspruch 1, bestehend aus

60 bis 95 Gew.-% der Komponente I und
 5 bis 40 Gew.-% der Komponente II.

3. Polyamidformmassen gemäß Ansprüchen 1 und 2, dadurch gekennzeichnet, daß das Pfropfprodukt aus

50 bis 90 Gew.-% der Komponente a und
10 bis 50 Gew.-% der Komponente b hergestellt wurde.

4. Polyamidformmassen gemäß Ansprüchen 1 bis 3, dadurch gekennzeichnet, daß sich die

0 001 245

Komponente b aus

$\alpha$) 10 bis 100 Gew.-% eines Esters der (Meth)acrylsäure bis zu 22 C-Atomen,
$\beta$) 0 bis 60 Gew.-% (Meth)acrylamid mit bis zu 22 C-Atomen und
$\gamma$) 0 bis 60 Gew.-% (Meth)acrylnitril zusammensetzt.

5. Polyamidformmassen gemäß Ansprüchen 1 bis 4, dadurch gekennzeichnet, daß das Polyamid Polyamid-6 oder Polyamid-6,6 ist.

6. Polyamidformmassen gemäß Ansprüchen 1 bis 5, dadurch gekennzeichnet, daß sich die aufzupfropfenden Einheiten von Acrylnitril und dem Ethyl-, n-Butyl-, tert.-Butyl, Octyl- oder Ethylhexylester der Acrylsäure ableiten.

7. Verwendung der Formmassen gemäß Ansprüchen 1 bis 6 zur Herstellung schlagzähiger Formkörper.

8. Schlagzähe Formkörper aus Polyamidformmassen gemäß Ansprüchen 1 bis 6.

## Claims

1. Polyamide moulding compositions consisting of

I. from 40 to 99.5% by weight of polyamides having a relative viscosity (as measured on a 1% solution in m-cresol at 25° C) of from 2.3 to 5 and
II. from 0.5 to 60% by weight of a graft product produced from
    a) 34 to 95% by weight of a crosslinked polymer of butadiene and/or polyisoprene, of which up to 40% by weight may optionally consist of styrene and/or acrylonitrile and/or an ester of acrylic acid, as the graft base and
    b) from 5 to 66% by weight of units to be grafted on of
        $\alpha$) from 3 to 100% by weight of an ester of (meth) acrylic acid containing up to 22 C-atoms,
        $\beta$) from 0 to 80% by weight of (meth)acrylamide containing up to 22 C-atoms and
        $\gamma$) from 0 to 80% by weight of (meth)acrylonitrile,
the respective sums of I. and II., a) and b) and $\alpha$) to $\gamma$) having to amount to 100% by weight.

2. Polyamide moulding compositions as claimed in Claim 1, consisting of from 60 to 95% by weight of component I and from 5 to 40% by weight of component II.

3. Polyamide moulding compositions as claimed in Claims 1 and 2, characterised in that the graft product is produced from 50 to 90% by weight of componente a) and 10 to 50% by weight of component b).

4. Polyamide moulding compositions as claimed in Claims 1 to 3, characterised in that component b) consists of

$\alpha$) from 10 to 100% by weight of an ester of (meth)acrylic acid containing up to 22 carbon atoms,
$\beta$) from 0 to 60% by weight of (meth)acrylamide containing up to 22 carbon atoms and
$\gamma$) from 0 to 60% by weight of (meth)acrylonitrile.

5. Polyamide moulding compositions as claimed in Claims 1 to 4, characterised in that the polyamide is polyamide-6 or polyamide-6,6.

6. Polyamide moulding compositions as claimed in Claims 1 to 5, characterised in that the units to be grafted on are derived from acrylonitrile and the ethyl, n-butyl, tert.-butyl, octyl or ethylhexyl ester of acrylic acid.

7. The use of the moulding compositions claimed in Claims 1 to 6 for the production of high-impact mouldings.

8. High-impact mouldings of the polyamide moulding compositions claimed in Claims 1 to 6.

## Revendications

1. Masses de moulage en polyamides consistant en

I. 40 à 99,5% en poids de polyamides ayant une viscosité relative (mesurée sur une solution à 1% dans du m-crésol à 25° C) de 2,3 à 5, et en
II. 0,5 à 60% en poids d'un produit greffé préparé à partir de
    a) 34 à 95% en poids d'un polymère réticulé de butadiène et/ou de polyisopropene qui peut être éventuellement constitué jusqu'à concurrence de 40% en poids de styrène et/ou d'acrylonitrile et/ou d'un ester de l'acide acrylique, comme substrat de greffage, et à partir de
    b) 5 à 66% en poids d'unités à greffer à

α) 3 à 100% en poids d'un ester de l'acide (méth)acrylique ayant jusqu'à 22 atomes de carbone, à

β) 0 à 80% en poids de (méth)acrylamide ayant jusqu'à 22 atomes de carbone et à

γ) 0 à 80% en poids de (méth)acrylonitrile,

la somme de I. et de II., a) et b) ou d'α) jusqu'à γ) devant donner chaque fois 100% en poids.

2. Masses de moulage en polyamides selon la revendication 1, consistant en

60 à 95% en poids du composant I et en
5 à 40% en poids du composant II.

3. Masses de moulage en polyamides selon les revendications 1 et 2, caractérisées en ce que le produit greffé a été préparé à partir de

50 à 90% en poids du composant a) et de
10 à 50% en poids du composant b).

4. Masses de moulage en polyamides selon les revendications 1 à 3, caractérisées en ce que le composant b se compose de

α) 10 à 100% en poids d'un ester d'acide (méth)acrylique ayant jusqu'à 22 atomes de carbone,

β) 0 à 60% en poids de (méth)acrylamide ayant jusqu'à 22 atomes de carbone et

γ) 0 à 60% en poids de (méth)acrylonitrile.

5. Masses de moulage en polyamides selon les revendications 1 à 4, caractérisées en ce que la polyamide est de la polyamide-6 ou de la polyamide-6,6.

6. Masses de moulage en polyamides selon les revendications 1 à 5, caractérisées en ce que les unités à greffer dérivent de l'acrylonitrile et de l'ester éthylique, n-butylique, t-butylique, octylique ou éthylhexylique d'acide acrylique.

7. Utilisation des masses de moulage selon les revendications 1 à 6 pour la fabrication de corps moulés résistant au choc.

8. Corps moulés résistant au choc au départ des masses de moulage en polyamides selon les revendications 1 à 6.